# EUROPÄISCHE PATENTANMELDUNG

(11) **EP 0 878 682 A2**
(43) Veröffentlichungstag der Anmeldung: **18.11.1998**
(21) Anmeldenummer: 98810439.4
(22) Anmeldetag: 14.05.1998
(51) Int. Cl.: F28D 20/00

(54) **Schichtladeeinrichtung für Flüssigkeit**

(30) Priorität: 16.05.1997 CH 1147/97
(71) Anmelder: Spring, Hans Ulrich, 3148 Lanzenhäusern (CH)
(72) Erfinder: Spring, Hans Ulrich, 3148 Lanzenhäusern (CH)
(74) Vertreter: BOVARD AG - Patentanwälte

(57) **Zusammenfassung**

Die Schichtladeeinrichtung weist einen Behälter (1) auf, in dem ein im wesentlichen vertikal angeordnetes Verteilrohr (3) für die Flüssigkeit mit in Abständen übereinander angeordneten Auslässen (6) angeordnet ist. Jedem der Auslässe ist eine Rückschlagklappe (7) zugeordnet und ein Zuführrohr (2) mündet auf einer mittleren Höhe in das Verteilrohr. Die Rückschlagklappen sind als flache Elemente gebildet, welche in Schliessstellung die die Öffnungen umgebende äussere Oberfläche des Verteilrohres dichtend berühren. Eine solche Schichtladeeinrichtung ist gegenüber bekannten Speichern wesentlich einfacher im Aufbau und daher kostengünstiger herzustellen. Zudem erlaubt insbesondere der Verzicht auf Ventilgehäuse und die Möglichkeit, Rückschlagklappen auf allen vier Seiten des Verteilrohres anzuordnen, grössere Strömungsquerschnitte und damit langsamere Fliessgeschwindigkeiten. Dies bringt Verbesserungen im Betrieb, insbesondere eine geringere Durchmischung von Flüssigkeitsschichten verschiedener Temperaturen und einen höheren Wirkungsgrad, mit sich.

## Beschreibung

Die Erfindung betrifft eine Schichtladeeinrichtung für Flüssigkeit, mit einem Behälter, in dem ein im wesentlichen vertikal angeordnetes Verteilrohr für die Flüssigkeit mit in Abständen übereinander angeordneten Auslässen angeordnet ist, wobei jedem der Auslässe eine Rückschlagklappe zugeordnet ist.

Beim Speichern einer erwärmten oder abgekühlten Flüssigkeit in einem Behälter ergibt sich aufgrund der unterschiedlichen Dichte von wärmerer und kühlerer Flüssigkeit über die Höhe des Behälters ein Temperaturgefälle, wobei sich im oberen Bereich des Behälters die wärmere Flüssigkeit ansammelt. Da man bei der Nutzung der auf diese Weise gespeicherten Wärme bestrebt ist, dem Behälter Wärme auf einem möglichst hohen Temperaturniveau zu entnehmen, ist es erstrebenswert, die Durchmischung wärmerer und kühlerer Anteile der gespeicherten Flüssigkeit im Behälter möglichst zu vermeiden.

Bei Behältern, denen die Flüssigkeit stets mit annähernd gleicher Temperatur zugeführt wird, kann die Durchmischung der Flüssigkeit mit relativ einfachen Mitteln gering gehalten werden. Handelt es sich beispielsweise um einen Warmwasserbereiter, wird kaltes Wasser unten in den Behälter eingeleitet und im oberen Bereich des Behälters wird erwärmtes Wasser entnommen. Soll andererseits der Behälter als Wärmetauscher dienen, beispielsweise um dem Kühlwasser einer Brennkraftmaschine Wärme zu entziehen, wird das von der Brennkraftmaschine kommende warme Wasser oben in den Behälter geleitet, in diesem durch eine Kühlschlange abgekühlt und im unteren Bereich des Behälters abgeführt.

Wesentlich schwieriger ist das Vermeiden von Durchmischung der Flüssigkeit in Behältern, bei welchen die Temperatur der zugeführten Flüssigkeit variiert. Dies ist beispielsweise bei Warmwasserspeichern oder Wärmetauschern in Verbindung mit Sonnenkollektoranlagen der Fall, oder in noch stärkerem Masse, bei Einrichtungen zur Rückgewinnung von Wärme aus Abwasser.

Es sind verschiedene derartige Einrichtungen bekannt, bei denen Mittel vorgesehen sind, die bewirken, dass die zugeführte Flüssigkeit auf derjenigen Höhe in den Behälter einströmt, in welcher sich eine Flüssigkeitsschicht befindet, die etwa die gleiche Temperatur hat wie die zugeführte Flüssigkeit. Solche Einrichtungen werden im allgemeinen als Schichtladeeinrichtungen bezeichnet.

Aus der Patentschrift DE 39 05 874 ist ein Warmwasserspeicher mit einer Ladewechselvorrichtung bekanntgeworden, welche ein im Speicher senkrecht angeordnetes Warmwasserzuführrohr mit in Abständen übereinander angeordneten Auslässen aufweist, an denen Klappenventile angeordnet sind. Das Warmwasserzuführrohr ist mit einem unten liegenden Einlass versehen und mündet am oberen Ende frei in den Speicherraum. Die Klappenventile weisen ein seitlich am Warmwasserzuführrohr angeordnetes Ventilgehäuse auf und enthalten aus einem Elastomer bestehende einstückige plattenförmige dünnwandige Rückschlagklappen mit einem die Rückschlagklappe im Abstand umgebenden Haltering und wenigstens einem sich dazwischen radial erstrekkenden schmalen Gelenkabschnitt. Für den Haltering ist ein Andruckring vorgesehen und als Ventilsitz für die Rückschlagklappe ist eine scharfkantige Dichtungskante an einer Schulter im Ventilgehäuse vorgesehen, die von der Rückschlagklappe mit einem geringen Überstand übergriffen wird.

Da bei diesem Warmwasserspeicher der Einlass unten angeordnet ist, wird das zugeführte Warmwasser zuerst durch diejenige Zone geleitet, in der das kühlste Wasser vorhanden ist und wird dort natürlich in unerwünschter Weise abgekühlt, noch bevor es einen der Auslässe erreicht. Die Konstruktion der Klappenventile mit einem Ventilgehäuse ist aufwendig und daher verhältnismässig teuer. Dadurch, dass die aus einem Elastomer bestehenden Rückschlagklappen an einem schmalen Gelenkabschnitt hängend gelagert sind, werden sie praktisch ausschliesslich durch die auf sie wirkende Gewichtskraft in die Schliessstellung gedrängt. Die Elastizität der Rückschlagklappen selbst kann über den schmalen Gelenkabschnitt nicht dazu ausgenutzt werden, die Rückschlagklappen in ihre Schliessstellung zu drängen.

Es ist daher eine Aufgabe der vorliegenden Erfindung, eine Schichtladeeinrichtung der oben genannten Art vorzuschlagen, die gegenüber den bekannten Einrichtungen einfacher im Aufbau und kostengünstiger herzustellen ist und einen höheren Wirkungsgrad aufweist.

Diese Aufgabe wird durch eine Schichtladeeinrichtung gelöst, welche die im kennzeichnenden Teil des Patentanspruchs 1 angegebenen Merkmale aufweist.

Eine nach dieser Lehre konstruierte Schichtladeeinrichtung ist gegenüber bekannten Einrichtungen dieser Art wesentlich einfacher im Aufbau und daher kostengünstiger herzustellen. Zudem erlauben die erfindungsgemässen Merkmale, insbesondere der Verzicht auf Ventilgehäuse, grössere Strömungsquerschnitte und damit langsamere Fliessgeschwindigkeiten, was wesentliche Verbesserungen im Betrieb, insbesondere eine geringere Durchmischung von Flüssigkeitsschichten verschiedener Temperaturen und einen höheren Wirkungsgrad, mit sich bringt.

Die Rückschlagklappen können aus einem gummielastischem Material wie beispielsweise Gummi oder Silikon bestehen, wodurch sie durch ihre eigene Elastizität in der Schliessstellung gehalten werden. Sie können aber auch als starre Platten ausgebildet sein, wobei in diesem Fall Scharniere erforderlich sind, mit denen die Rückschlagklappen am Verteilrohr schwenkbar befestigt sind. Diese Scharniere können durch Achsen oder durch gummielastische Streifen gebildet sein.

Bevorzugt sind die Rückschlagklappen, die sich oberhalb des Zuführrohres befinden, an ihrem oberem Ende am Verteilrohr befestigt und die Rückschlagklappen, die sich unterhalb des Zuführrohres befinden, an ihrem unterem Ende befestigt. Um dabei die Schliesswirkung zu verbessern, bestehen nach einer Ausführungsart die sich oberhalb des Zuführrohres befindenden Rückschlagklappen aus einem Material mit höherer Dichte als die Flüssigkeit und/oder sie weisen an ihrem freien Ende einen Gewichtskörper auf. Die sich unterhalb des Zuführrohres befindenden Rückschlagklappen bestehen aus demselben Grund aus einem Material mit geringerer Dichte als die Flüssigkeit und/oder weisen an ihrem freien Ende einen Auftriebskörper auf.

Besonders einfach können die Rückschlagklappen aus einem sich über mehrere Öffnungen erstreckenden Band gebildet sein, das oberhalb und unterhalb jeder Öffnung am Verteilrohr befestigt ist.

Ein besonders günstiger Strömungsquerschnitt wird erreicht, wenn das Verteilrohr einen drei- oder mehreckigen Querschnitt hat und auf allen Seiten Rückschlagklappen angeordnet sind.

Damit in den Behälter eingeleitete Flüssigkeit, die kälter ist als die im untersten Bereich des Behälters vorhandene, den Speicher nicht unerwünscht abkühlt, ist nach einer Ausführungsart das Verteilrohr unten offen und in der gleichen Achse befindet sich am unteren Ende des Behälters ein Abfluss, durch den diese kalte Flüssigkeit direkt abfliessen kann.

Um die Strömungsverhältnisse innerhalb des Behälters weiter zu verbessern und Turbulenzen möglichst zu vermeiden, können scheiben- oder trichterförmige Separatoren vorhanden sein, die sich vom Verteilrohr nach aussen erstrecken.

Im folgenden werden Ausführungsbeispiele der Erfindung anhand der beiliegenden Zeichnungen genauer beschrieben. Es zeigt
- Figur 1: eine Prinzipskizze einer ersten Ausführungsart einer erfindungsgemässen Schichtladeeinrichtung, geschnitten und im Aufriss,
- Figur 2: eine Prinzipskizze der in Figur 1 dargestellten Schichtladeeinrichtung, geschnitten und im Grundriss,
- Figur 3: eine vergrösserte Darstellung einer Einzelheit der ersten Ausführungsart, links in Ansicht in geschlossener Stellung, rechts im Schnitt in geöffneter Stellung,
- Figur 4: eine der Figur 3 entsprechende Darstellung einer weiteren Ausführungsart,
- Figur 5: eine weitere Ausführungsart der Rückschlagklappen und
- Figuren 6 und 7: Einzelheiten einer weiteren Ausführungsart der Rückschlagklappen einer erfindungsgemässen Schichtladeeinrichtung.

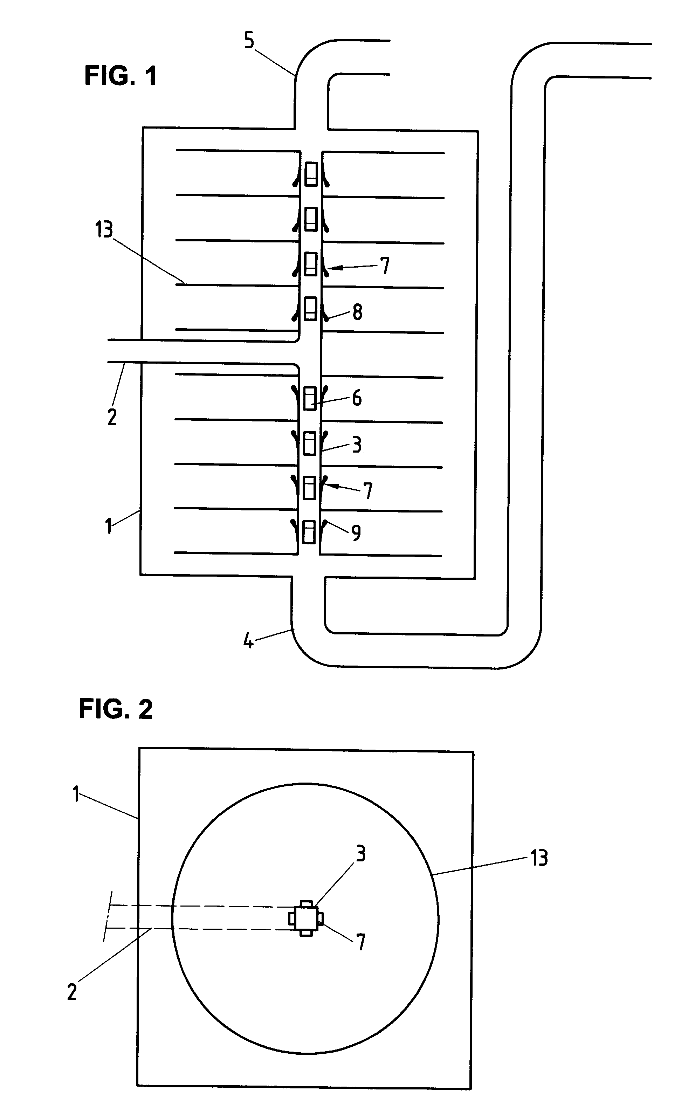

Die Schichtladeeinrichtung gemäss den Figuren 1 und 2 weist einen Behälter 1 auf, der im vorliegenden Beispiel einen viereckigen Querschnitt hat, aber selbstverständlich eine beliebige Querschnittsform aufweisen kann. Mit 2 ist ein Zuführrohr für die Flüssigkeit bezeichnet und mit 3 ein weiter unten ausführlicher beschriebenes, im wesentlichen vertikal angeordnetes Verteilrohr. Das Zuführrohr 2 mündet etwa auf halber Höhe in das Verteilrohr 3 und wird somit durch einen Bereich der gespeicherten Flüssigkeit geführt, in welchem diese normalerweise eine mittlere Temperatur aufweist. Abhängig von der Verwendung der Schichtladeeinrichtung könnte das Zuführrohr auch oben in das Verteilrohr geführt werden.

Der Behälter weist ferner einen unteren, zentral angeordneten Abfluss 4 für kühle Flüssigkeit und einen oberen Abfluss 5 für warme Flüssigkeit auf. Wie in Figur 1 ersichtlich, ist der untere Abfluss 4 mit einem Rohr verbunden, das ausserhalb des Behälters 1 bis über dessen oberes Ende hinaus geführt ist, damit der Behälter stets gefüllt bleibt. Die Querschnitte des Zuführrohres, des Verteilrohres und der Abflüsse sind verhältnismässig gross, um eine kleine Strömungsgeschwindigkeit und damit möglichst eine laminare Strömung zu erreichen. Die Aussenoberfläche des Behälters 1 kann mit einer nicht dargestellten Wärmeisolation versehen sein. Falls die Schichtladeeinrichtung in einem Wärmetauscher verwendet werden soll, kann dieser im Inneren des Behälters eine Rohrschlange aufweisen. Eine solche ist aber für die Darlegung der vorliegenden Erfindung nicht wesentlich und daher in den Figuren nicht dargestellt.

Das Verteilrohr 3 weist in der in Figur 1 und 2 dargestellten Ausführungsart einen quadratischen Querschnitt auf und hat in allen vier Seitenwänden Öffnungen 6, die als Auslässe für die Flüssigkeit dienen. Jede der Öffnungen 6 ist mit einer Rückschlagklappe 7 abgedeckt, die in ihrer Ruhestellung die äussere Oberfläche des Verteilrohres rund um die Öffnung dichtend berührt. In Figur 1 sind alle Rückschlagklappen offen gezeichnet, damit sie besser sichtbar sind; im Betrieb des Speichers befinden sich natürlich die meisten Rückschlagklappen in ihrer geschlossenen Ruhestellung, und nur diejenigen sind geöffnet, bei denen Flüssigkeit mit der auf dieser Höhe herrschenden Temperatur in den Behälter strömt.

Die Rückschlagklappen bestehen bevorzugt aus einem gummielastischen Kunststoff und sind an einer Seite der Öffnung auf der ganzen Länge ihres betreffenden Randes befestigt, so dass sie durch ihre Elastizität in der Schliessstellung gehalten werden. Wie aus Figur 1 ersichtlich ist, sind die Rückschlagklappen, die sich oberhalb des Zuführrohres 2 befinden, an ihrem oberen Rand befestigt und diejenigen, welche unterhalb des Zuführrohres angeordnet sind, sind an ihrem unteren Rand befestigt. Versuche haben gezeigt, dass eine solche Anordnung besonders günstige Strömungsverhältnisse schafft und das Öffnen der Rückschlagklappen durch die Flüssigkeit erleichtert. Die vorbeiströmende Flüssigkeit erzeugt beim Anfang jeder Öffnung 6 einen Unterdruck, wodurch auf Klappen, die nicht geöffnet werden sollen, eine zusätzliche Schliesskraft ausgeübt wird. Das Verteilrohr 3 ist an seinem unteren Ende offen, damit zugeführte Flüssigkeit, die kälter ist als die im unteren Bereich des Behälters 1 vorhandene Flüssigkeit, direkt in den zentral angeordneten unteren Abfluss 4 gelangen kann. Um dies zusätzlich zu erleichtern, hat der untere Abfluss 4 einen grösseren Querschnitt als das Verteilrohr 3.

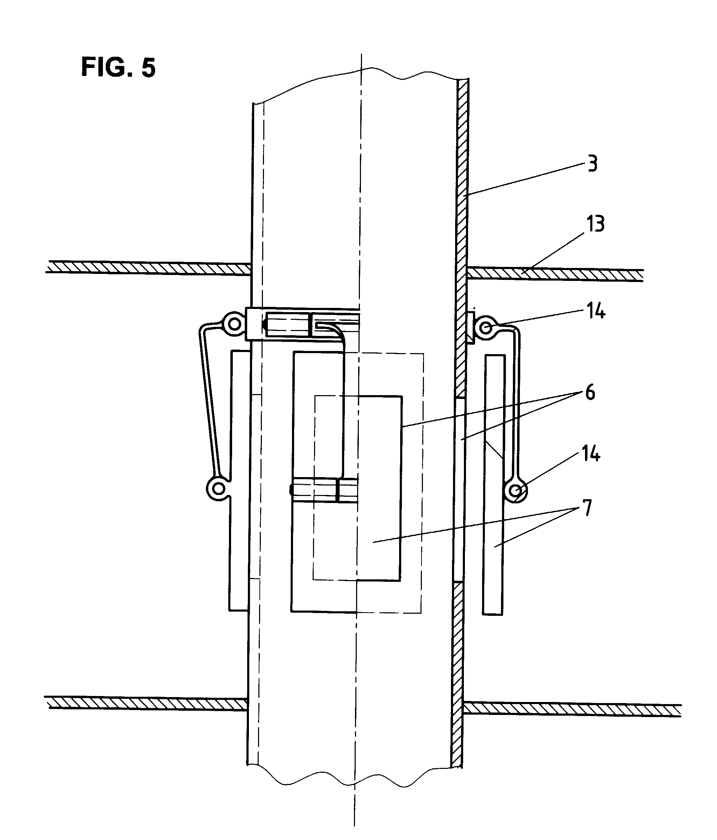

Alternativ zu der soeben beschriebenen Gestaltung der Rückschlagklappen aus gummielastischem Werkstoff können diese auch, wie in Figur 5 dargestellt, aus einer starren Platte bestehen und mittels Scharnieren 14 schwenkbar am Verteilrohr 3 befestigt sein. Zur Verbesserung der Dichtwirkung kann auf der Berührungsfläche des Verteilrohres und/oder der Platte eine Beschichtung aus einem weichen Material vorgesehen sein. Bei Rückschlagklappen 7 dieser alternativen Ausführungsart, bei denen ein Scharnier am unteren Rand der Öffnung 6 angeordnet ist, müssen zusätzliche Mittel vorgesehen sein, welche die Rückschlagklappen in Richtung ihrer Schliessstellung beaufschlagen. Dies können Federn sein, beispielsweise auf einer Scharnierachse sitzende Torsionsfedern, oder aber Schliessmittel der nachfolgend beschriebenen Art.

Beide Ausführungsarten der vorangehend beschriebenen Rückschlagklappen können zusätzlich so ausgestaltet werden, dass auf sie Kräfte wirken, welche sie in ihre Schliessstellung drängen. Eine solche Ausgestaltung kann besonders einfach, betriebssicher und kostengünstig darin bestehen, dass die Rückschlagklappen, die sich oberhalb des Zuführrohres befinden, aus einem Material mit höherer Dichte als die Flüssigkeit bestehen und/oder an ihrem freien Ende einen Gewichtskörper aufweisen, und dass die Rückschlagklappen, die sich unterhalb des Zuführrohres befinden, aus einem Material mit geringerer Dichte als die Flüssigkeit bestehen und/oder an ihrem freien Ende einen Auftriebskörper aufweisen. Die Dichten der üblicherweise für den Wärmetransport verwendeten Flüssigkeiten betragen zwischen 0,79 für beispielsweise Alkohol und 1,19 für beispielsweise Kochsalzlösung. Die Begriffe "höhere" beziehungsweise "geringere Dichte als die Flüssigkeit" sind daher im vorliegenden Zusammenhang so auszulegen, dass das schwerere Material eine Dichte von deutlich mehr als 1,19 und das leichtere eine solche von deutlich weniger als 0,79 aufweisen soll. Rein beispielsweise könnte für die Rückschlagklappen oberhalb des Zuführrohres beziehungsweise die Gewichtskörper ein Metall verwendet werden und für die Rückschlagklappen unterhalb des Zuführrohres beziehungsweise die Auftriebskörper Kork, Holz oder ein geschäumter Kunststoff.

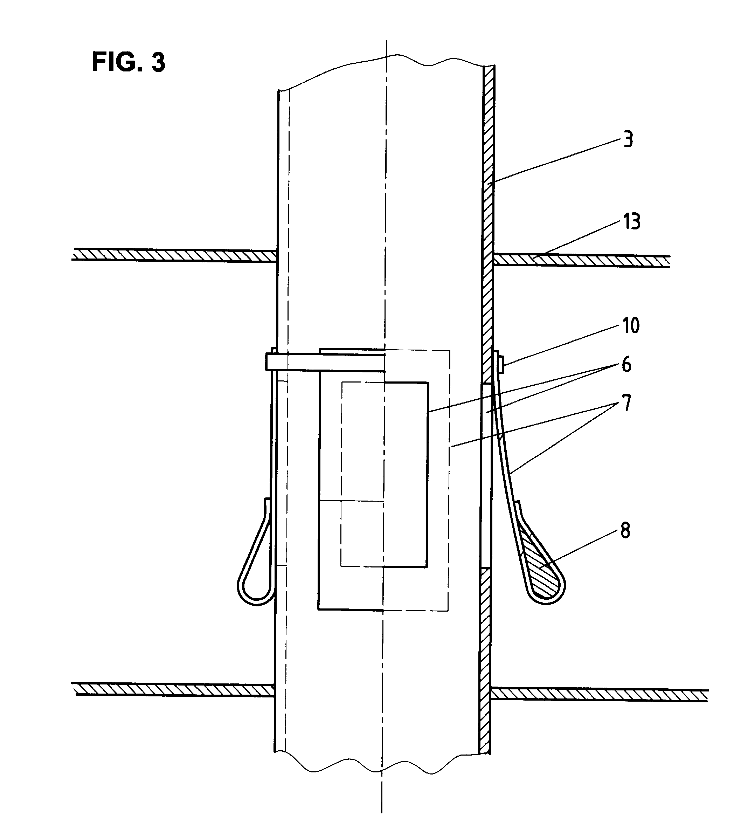

Figur 3 zeigt in vergrösserter Darstellung eine in der oberen Hälfte des Speichers angeordnete Rückschlagklappe. Der Gewichtskörper 8 ist in diesem Beispiel am Freien Ende der Rückschlagklappe 7 befestigt, indem das Material der Rückschlagklappe wie ein Saum um den Gewichtskörper gelegt und beispielsweise durch Kleben oder Schweissen befestigt ist. Die Figur zeigt auch eine erste Art der Befestigung der Rückschlagklappen am Verteilrohr 3, nämlich durch ein um das Verteilrohr herum gespanntes Band 10, mit dem gleichzeitig vier Rückschlagklappen am Verteilrohr festgehalten werden.

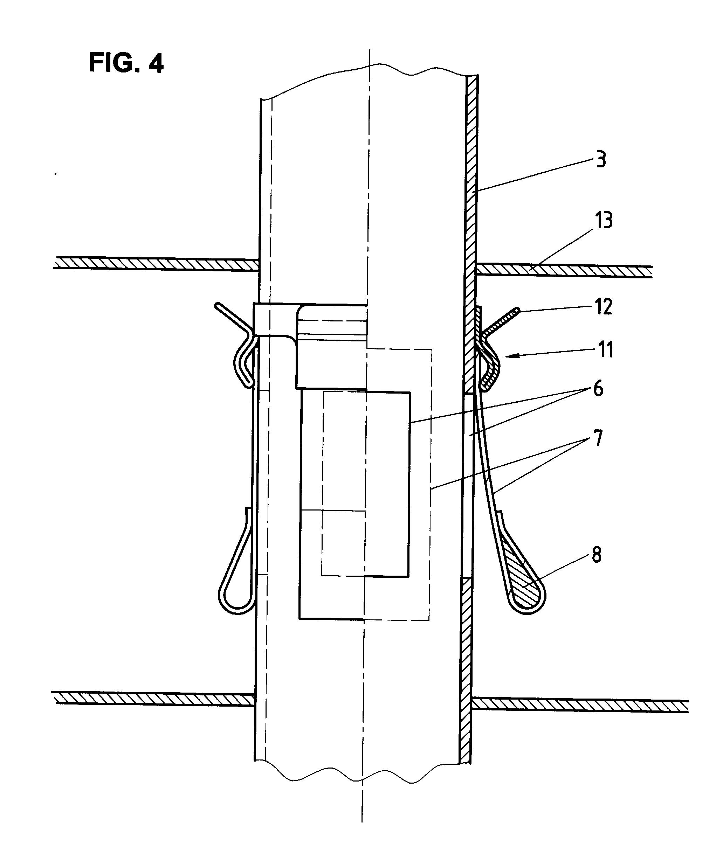

In Figur 4 ist eine alternative Art der Befestigung der Rückschlagklappen am Verteilrohr dargestellt. Anstelle des Bandes 10 ist bei dieser Ausführungsart auf jeder Seite des Verteilrohres 3 eine Klemmleiste 11 vorgesehen, die ihrerseits mittels eines Bandes am Verteilrohr befestigt sein kann. Diese Befestigungsart der Rückschlagklappen erlaubt in sehr einfacher Weise deren Austausch, beispielsweise im Falle einer Revision der Schichtladeeinrichtung. Durch Drücken der Betätigungsflügel 12 der Klemmleisten 11 wird die Rückschlagklappe freigegeben und kann durch eine neue ersetzt werden.

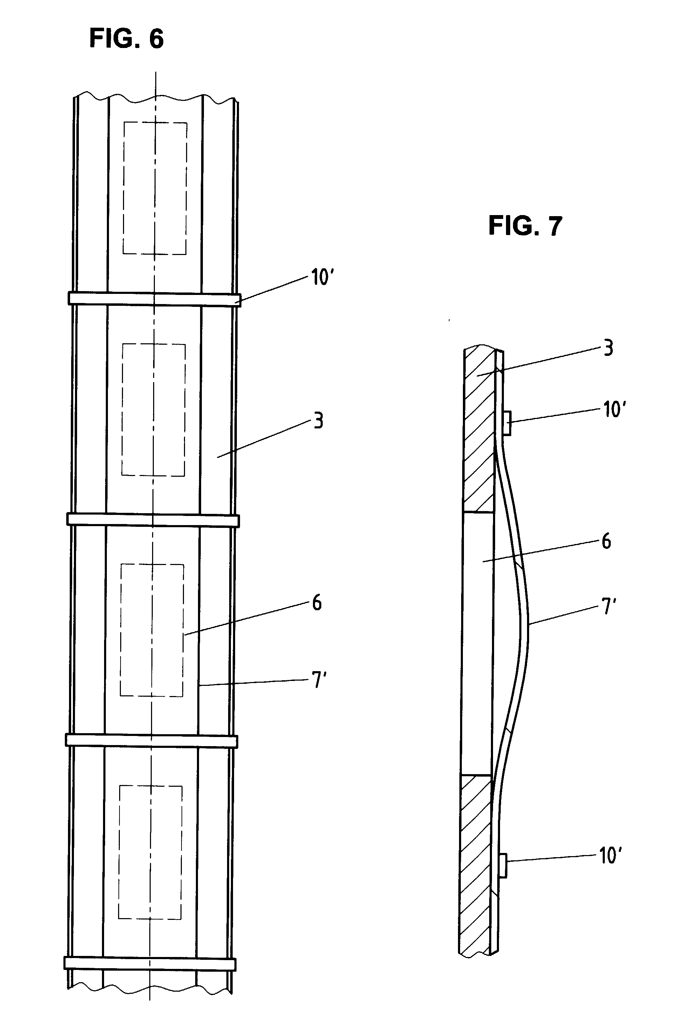

Die Figuren 6 und 7 zeigen eine weitere Ausführungsart der Rückschlagklappen, die dort mit 7' bezeichnet sind. Diese bestehen aus einem weichen, gummielastischen Material, beispielsweise aus Gummi oder Silikon mit sehr niedriger Shorehärte, und sind jeweils am oberen und unteren Rand der betreffenden Öffnung 6 befestigt. Solche Klappen werden an ihren seitlichen Rändern elastisch verformt, sobald der Druck der Flüssigkeit im Verteilrohr grösser ist als im umgebenden Bereich des Behälters und nehmen dann etwa die in Figur 4 dargestellte Stellung ein. Die Vorteile dieser Ausführungsart bestehen insbesondere darin, dass auf zusätzliche Schliessmittel verzichtet werden kann und dass die Rückschlagklappen aus einem durchgehenden Band bestehen können, welches oberhalb und unterhalb jeder Öffnung 6 befestigt ist. Zur Befestigung können beispielsweise Bänder 10' verwendet werden, wie dies in den Figuren 6 und 7 dargestellt ist.

Als zusätzliche Mittel zur Vermeidung der Durchmischung der im Behälter gespeicherten Flüssigkeit können Separatoren 13 vorgesehen sein, die sich jeweils zwischen zwei Rückschlagklappen vom Verteilrohr nach aussen erstrecken. Dadurch wird die durch die Rückschlagklappen austretende Flüssigkeit so geleitet, dass möglichst keine Turbulenzen entstehen. Diese Separatoren 13 können wie dargestellt scheibenförmig ausgebildet sein, oder aber trichterförmig.

Im folgenden wird der Betrieb einer erfindungsgemässen Schichtladeeinrichtung anhand eines Beispiels beschrieben. In diesem Beispiel wird angenommen, dass im Behälter Abwasser gespeichert wird, dem mittels einer nicht dargestellten Rohrschlange Wärme entzogen wird. Die hauptsächlichen Schwierigkeiten bei der Wärmerückgewinnung aus Abwasser liegen darin, dass dieses in der Regel diskontinuierlich anfällt und sehr unterschiedliche Temperaturen aufweisen kann. Es wird weiter angenommen, dass zu Beginn der im folgenden geschilderten Vorgänge der Behälter 1 gefüllt ist und das Wasser darin eine von oben nach unten abnehmende Temperatur aufweist. Der obere Abfluss 5 ist geschlossen oder gar nicht vorhanden. An seiner Stelle kann ein Entlüftungsventil vorgesehen sein. Sobald durch das Zuführrohr 2 eine Menge Wasser einfliesst, die wärmer ist als das bei der Einmündung in das Verteilrohr 3 vorhandene Wasser, wird das neu zugeführte Wasser im Verteilrohr 3 nach oben fliessen, weil seine Dichte geringer ist als diejenige des kühleren Wassers. Das wärmere Wasser steigt dabei bis zu jener Höhe auf, in der etwa die seiner Temperatur entsprechende Temperatur herrscht, drückt die an dieser Stelle vorhandenen Rückschlagklappen 7 auf und strömt durch die Öffnungen 6 in den Behälter. Gleichzeitig fliesst eine gleiche Menge abgekühltes Wasser aus dem untersten Bereich des Behälters durch den Abfluss 4 weg. Wenn umgekehrt dem Behälter eine Menge Wasser zugeführt wird, die kühler ist als das bei der Einmündung in das Verteilrohr 3 vorhandene Wasser, wird das neu zugeführte Wasser im Verteilrohr 3 nach unten fliessen, weil seine Dichte höher ist als diejenige des dort vorhandenen Wassers. Das kühlere Wasser sinkt bis zu jener Höhe ab, in der etwa die seiner Temperatur entsprechende Temperatur herrscht und strömt dort wie oben geschildert in den Behälter 1. Ist die Temperatur des zugeführten Wassers geringer als diejenige des zuunterst im Behälter vorhandenen Wassers, fliesst dieses zugeführte Wasser direkt in den Abfluss 4, ohne das im Speicher vorhandene Wasser abzukühlen.

## Patentansprüche

1. Schichtladeeinrichtung für Flüssigkeit, mit einem Behälter (1), in dem ein im wesentlichen vertikal angeordnetes Verteilrohr (3) für die Flüssigkeit mit in Abständen übereinander angeordneten Auslässen angeordnet ist, wobei jedem der Auslässe eine Rückschlagklappe (7) zugeordnet ist, dadurch gekennzeichnet, dass ein Zuführrohr (2), mit welchem die Flüssigkeit von aussen in den Behälter zu führen ist, oben oder auf einer mittleren Höhe in das Verteilrohr mündet, dass die Auslässe Öffnungen (6) im Verteilrohr sind, und dass die Rückschlagklappen (7; 7') als flache Elemente gebildet sind, welche in Schliessstellung die die Öffnungen umgebende äussere Oberfläche des Verteilrohres dichtend berühren.

2. Schichtladeeinrichtung nach Anspruch 1, dadurch gekennzeichnet, dass die Rückschlagklappen (7; 7') aus einem gummielastischem Material bestehen.

3. Schichtladeeinrichtung nach Anspruch 1 oder 2, dadurch gekennzeichnet, dass die Rückschlagklappen als starre Platten ausgebildet sind, die am Verteilrohr (3) mit Scharnieren (14) schwenkbar befestigt sind.

4. Schichtladeeinrichtung nach einem der vorangehenden Ansprüche, dadurch gekennzeichnet, dass die Rückschlagklappen (7), die sich oberhalb des Zuführrohres befinden, an ihrem oberem Ende am Verteilrohr (3) befestigt sind und die Rückschlagklappen (7), die sich unterhalb des Zuführrohres befinden, an ihrem unterem Ende am Verteilrohr (3) befestigt sind.

5. Schichtladeeinrichtung nach Anspruch 4, dadurch gekennzeichnet, dass die Rückschlagklappen (7), die sich oberhalb des Zuführrohres befinden, aus einem Material mit höherer Dichte als die Flüssigkeit bestehen und/oder an ihrem freien Ende einen Gewichtskörper (8) aufweisen, um sie in ihre Schliessstellung zu drängen.

6. Schichtladeeinrichtung nach einem der Ansprüche 4 oder 5, dadurch gekennzeichnet, dass die Rückschlagklappen (7), die sich unterhalb des Zuführrohres befinden, aus einem Material mit geringerer Dichte als die Flüssigkeit bestehen und/oder an ihrem freien Ende einen Auftriebskörper (9) aufweisen, um sie in ihre Schliessstellung zu drängen.

7. Schichtladeeinrichtung nach einem der Ansprüche 1 oder 2, dadurch gekennzeichnet, dass die Rückschlagklappen (7') aus einem sich über mehrere Öffnungen (6) erstreckenden Band bestehen, das oberhalb und unterhalb jeder Öffnung (6) am Verteilrohr (3) befestigt ist.

8. Schichtladeeinrichtung nach einem der vorangehenden Ansprüche, dadurch gekennzeichnet, dass das Verteilrohr (3) einen drei- oder mehreckigen Querschnitt hat und auf allen Seiten Rückschlagklappen (7; 7') angeordnet sind.

9. Schichtladeeinrichtung nach einem der vorangehenden Ansprüche, dadurch gekennzeichnet, dass das Verteilrohr (3) unten offen ist und sich in der gleichen Achse am unteren Ende des Behälters (1) ein Abfluss (4) für abgekühlte Flüssigkeit befindet, dessen Querschnitt vorzugsweise grösser ist als derjenige des Verteilrohres (3).

10. Schichtladeeinrichtung nach einem der vorangehenden Ansprüche, gekennzeichnet durch scheiben- oder trichterförmige Separatoren (13), die sich vom Verteilrohr (3) nach aussen erstrecken.
